# EUROPEAN PATENT SPECIFICATION

(11) **EP 1 732 033 B1**
(45) Date of publication and mention of the grant of the patent: **27.02.2008**
(21) Application number: 06115192.4
(22) Date of filing: 09.06.2006
(51) Int. Cl.: G06K 19/077

(54) **Booklet cover**
Buchumschlag
Couverture d'un livret

(30) Priority: 10.06.2005 GB 0511842
(43) Date of publication of application: 13.12.2006
(73) Proprietor: De La Rue International Limited, Basingstoke, Hampshire RG22 4BS (GB)
(72) Inventor: Holland, Barry John, Andover, Hampshire SP10 3XT (GB); Nugent, Nicholas Oliver, Basingstoke, Hampshire RG24 8RW (GB)
(74) Representative: Skone James, Robert Edmund

(56) References cited:
- EP-A- 0 776 839
- US-A1- 2003 057 286
- US-A1- 2003 168 514
- US-A1- 2003 178 495

## Description

The invention relates to a cover for a booklet and a method of making such a cover.

The invention is particularly concerned with covers which are to incorporate an IC chip. Such covers are used in a variety of security applications and in particular passports, bank and building society payment/savings books, ration books, passports of life and the like.

Conventional passport covers are generally manufactured from paper or woven polyester/cotton base stock. The manufacturing and final product construction varies according to the materials used. Generally, paper covers consist of a paper base, sometimes impregnated with a polymeric resin to increase internal bond strength, which is then coated with one or more layers of a coloured resin which is embossed to produce a decorative finish such as a grain.

Woven covers, prior to decorative coating and embossing, are typically back filled to prevent the cover resin bleeding through to the reverse of the substrate.

Conventional covers are then applied and secured to the end paper of a passport folio by means of a water-based adhesive, such as PVAc glue, or the like.

When an IC chip is incorporated in the cover, it is important to protect the chip from shocks received both during manufacture and during normal use. US-A-20030168514 describes a variety of cover constructions which are designed to provide such an impact resistant cover. In these designs, a paper or other fibre based material is used as a cover layerwhich is impregnated with a styrene-butadiene copolymer latex to provide resistance to tearing and also to provide some protection to the IC chip. In addition, the chip is located in a thick layer made of blotting-type paper also impregnated with styrene-butadiene. These layers are laminated together and serve to protect the chip against shocks.

One drawback of this approach is that the material which impregnates the cover interferes with the bonding of the decorative outer layer. Furthermore, since most IC chips require an antenna, a separate, special insulation has to be incorporated in the structure surrounding the antenna.

Another problem is the requirement to use a fibrous layer and particularly paper which will permanently deform when subjected to an impact. That is to say the fibrous layer when subjected to an impact will deform and it is this deformation that allows the energy to be absorbed. This deformation takes place very locally around the area of impact. The chip is relatively hard compared to the surrounding fibrous matter. As such the weight will fall initially onto the fibrous material causing it to deform. Once the fibrous material has deformed to the level of the chip, the weight will then impact on the chip.

In accordance with a first aspect of the present invention, a flexible, impact resistant cover for a booklet comprises
a cover assembly including a cover layer secured to a first impact resistant thermoplastic layer, and an outer layer on the cover layer whose outer surface has been formed so as to present a decorative finish; and
a second impact resistant thermoplastic layer secured to the first impact resistant thermoplastic layer and in which an IC chip is at least partly embedded,
wherein the first and second impact resistant thermoplastic layers provide a shock absorbing function to protect the IC chip.

In accordance with a second aspect of the present invention, a method of manufacturing a flexible, impact resistant cover for a booklet comprises
a) providing a cover layer with an outer layer and forming the outer surface of the outer layer to present a decorative finish;
b) securing a first impact resistant thermoplastic layer to the opposite side of the cover layer from the outer layer to form a cover assembly;
c) securing a second impact resistant thermoplastic layer to the first impact resistant thermoplastic layer; and,
d) at least partially embedding an IC chip in the second impact resistant thermoplastic layer,
wherein the first and second impact resistant thermoplastic layers providing a shock absorbing function to protect the IC chip.

In this invention, we avoid the problem mentioned above concerning interference between the material impregnating the cover and the outer decorative layer by separating out the cover layer on the one hand and the first impact resistant thermoplastic layer on the other hand. In addition, this set of layers defines a cover assembly component which provides a significant proportion of the impact resistance. This should be contrasted with the prior art structures in which the cover assembly was defined simply by the impregnated woven or non-woven cover member which would have present very little impact resistance.

Furthermore, the construction does not rely on a fibrous material to absorb the energy of an impact by deformation. We make use of polymer thermoplastic elastomeric layers capable of dissipating the impact energy. When the cover suffers an impact, the energy is dissipated throughout the whole of the impact resistant layer. Unlike a fibrous layer, which has lots of air spaces that collapse in order to absorb the energy, the thermoplastic layer allows the energy to spread across the surface and thus dissipate more evenly.

The cover layer may be formed from a woven material such as woven polyester, polyester/cotton or woven nylon, or another plastic material such as nylon sheet, or paper or cardboard.

Typically, the cover layer is provided with the outer layer, for example by coating the outer layer of decorative resin or the like, onto the cover layer, the outer layer then being embossed or otherwise provided with the decorative finish such as a grain pattern. Coating of the outer layer onto the cover layer can be carried out by doctor blade or Mayer bar processes and the outer layer could comprise one or more layers. Embossing is typically carried out by means of an embossing roller.

Alternatively, the embossing step could be carried out after the laminating step (described below) since it is easier to provide a registered pattern. That is the decorative pattern could contain elements e.g. a crest precisely coated on the cover.

In the case of a woven cover layer, the weave and thickness of the woven material can be varied to achieve the desired stiffness and physical appearance but will generally fall in the range of 100-350 microns.

The cover layer, typically with the outer layer provided thereon, is then secured to the first impact resistant thermoplastic layer, typically by laminating a film of thermoplastic or coating the thermoplastic onto the cover layer. This could be carried out at the same location as provision of the outer layer or at a different location.

The first impact resistant thermoplastic layer is typically made of polyurethane thermoplastic elastomer or other thermoplastic elastomer materials e.g. PET TPE, PC TPE, PP TFE or PE TPE.

The layer structure of the cover is completed with a second impact resistant thermoplastic layer, again typically of polyurethane shock absorber, which may be provided as a self-supporting film or preferably coated onto a further layer typically of a woven material similar to that of the cover layer.

In a preferred embodiment, a hole or cavity is punched into the second impact resistant layer and further layer, if provided, and an IC chip module placed in the cavity. A copper wire antenna is then deposited into the second impact resistant layer, by means of heat or ultrasonic process. Up to 80% of the antenna wire is embedded into the second impact resistant layer. The antenna is connected to the chip by thermocompression welding, ultrasonic welding, soldering or conductive adhesive. The second impact resistant layer is then laminated to the first layer. The lamination conditions are such that the first and second impact resistant layers flow into one another, thus accommodating the remaining 20% of antenna bulk.

Lamination conditions will depend upon the grade of shock absorber used, but temperatures in the range 100-170°C may be used. The process typically involves initial hot lamination carried out at pressures in the region 10-80kPa and then subsequent cold lamination at pressures in the range of 600-1000kPa.

The finished cover can then be applied and secured to an end paper of a stitched passport folio by means of standard passport manufacturing processes, e.g. using Kugler or Uno machines.

The result of this is that the passport will have better durability properties to a conventional chip in cover passport at equivalent cost.

Some examples of covers according to the invention and methods for their manufacture will now be described with reference to the accompanying drawings, in which:-
Figure 1 is a schematic cross-section through a cover during manufacture; and,
Figure 2 is a cross-section through a finished cover incorporating an IC chip and prior to bonding to an end paper.

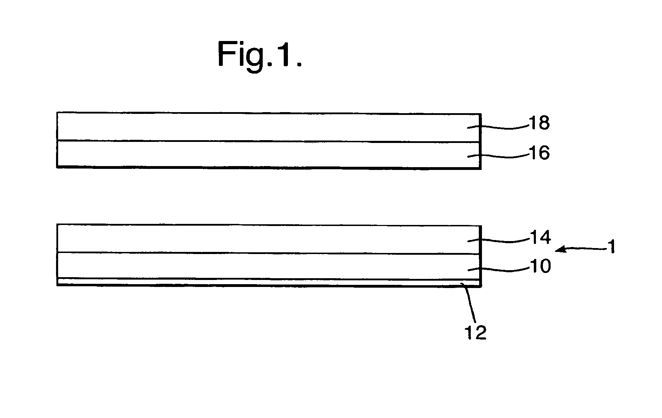

Figure 1 illustrates an intermediate stage in the production of a cover according to an example of the invention. These can be manufactured using web or sheet processes. In this particular example, a cover assembly 1 has been manufactured by providing a cover member 10, typically made of a woven polyester material with a thickness of 110 microns, which has been coated with an outer layer of a coloured or decorative resin 12, that layer having been embossed with an embossing roller to provide a decorative grain pattern (not shown). If the cover layer 10 has been woven then its weave and thickness will be chosen to achieve a desired stiffness and coating properties and will typically generally fall in the range 100-350 microns.

The cover layer 10 has been laminated to a first layer 14 of polyurethane TPE having a thickness of about 130 microns.

Separately, a second layer of polyurethane TPE 16 has been coated onto a woven support layer 18, the layer 16 having a thickness of about 130 microns and the layer 18 a thickness of about 110 microns and being made of polyester.

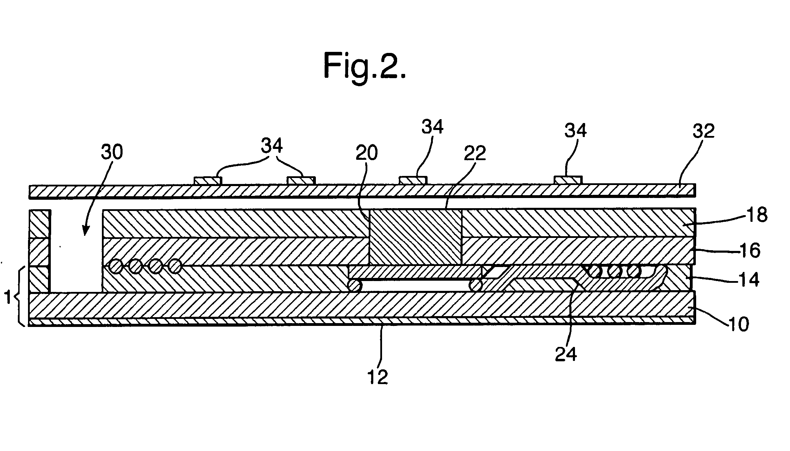

A cavity 20 (Figure 2) is then die cut into the layers 16,18 and an IC chip 22 is located in the cavity 20. A copper wire antenna 24 is then welded, as previously described, to the IC chip 22.

The two pre-laminated components together with the embedded IC chip 22 and antenna 24 are then brought together so that the layers 14,16 abut and the components are then fully hot laminated and subsequently cold laminated to secure them together. During this process, the copper wire antenna 24 will become embedded in the polyurethane TPE layer 14.

A die cut slot 30 is formed in a spine region of the layers 14,16,18 since it has been found that this enables the subsequently formed book to close fully and not gape open. The depth of the die cut is controlled to allow uniform coating during passport manufacture.

Finally, the finished cover is bonded in a conventional manner to an end paper 32 of a passport folio, the end paper 32 carrying security indicia indicated schematically at 34. These security indicia together with the data stored in the IC chip 22 relate to the bearer of the passport.

The lamination conditions involved will depend upon the grade of shock absorber used for the layers 14,16 but typically during hot lamination temperatures in the range 100-170°C may be used with pressures in the range 10-80kPa. The subsequent cold lamination may take place at pressures in the range of 600-1000kPa. It will be appreciated that the finished structure shown in Figure 2 could be made in a variety of different ways. In one particularly preferred construction, the layers 10,14,16.18 are laminated together simultaneously. However, the multiple component approach enables the different components to be manufactured in different locations and possibly secured together at a further location.

Typically, the embossed design on the outer surface of the layer 12 is imparted by means of an embossing roller but could also be imparted by means of emboss lamination plates. Thus, the decorative finish is produced at the same time as two or more of the layers are laminated together. This allows adhesives with higher activation temperatures to be used which would otherwise lead to softening of the decorative cover coating.

In other examples, the cover assembly 1 could be manufactured without the coating 12 and secured to the layers 16,18 and then the finished laminate provided with the coating 12 and embossed.

The layer 14 could be provided on the layer 10 before provision of the outer coating 12.

Examples of materials other than polyurethane which could be used for the layer 16 and the layer 14 include PET TPE, PC TPE, PP TFE or PE TPE.

If the layers 14, 16 are self supporting, for example made of polyurethane or the like, then in order to bond the cover to the end paper 32, the layer 14 is not die cut to form part of the slot 30 but instead is activated using heat and pressure in order to bind it to the end paper through the remainder of the slot 32 in layers 16,18.

In another option, where the layer 14 is made of a shock absorbing material compatible with water-based PVA adhesive, it again may not be die cut but bonded via a PVA adhesive to the end paper 32. A suitable material for the layer 14 (and the layer 16) would be thermoplastic polyester such as DSM Arnitel.

It will be appreciated in all these examples that the impact resistance property is provided by the layers 14,16. Impact resistance can be determined using a conventional impact test such as that described in ASTM D2794. This essentially comprises a falling weight which drops down onto an indenter component resting on the cover and beneath which is provided an anvil. The indenter has a flat end as does the anvil. The weight indenter and anvil are manufactured from stainless steel, the diameter of the impact area of the indenter being 24mm. The weight of the indenter is 1.814 kilograms.

In use, the weight is raised to the required level while the cover is placed between the indenter and anvil and clamped in place. The weight is then released and dropped onto the indenter.

The impact resistance can be defined as the maximum height of falling weight the chip area could withstand without chip failure.

We have found that with a cover manufactured in accordance with Figure 2, the chip could still function after impact from 500mm height which indicates good impact resistance.

## Claims

1. A flexible, impact resistant cover for a booklet, the cover comprising:
a cover assembly (1) including a cover layer (10) secured to a first impact resistant thermoplastic layer (14), and an outer layer (12) on the cover layer (10) whose outer surface has been formed so as to present a decorative finish; and
a second impact resistant thermoplastic layer (16) secured to the first impact resistant thermoplastic layer (14) and in which an IC chip is at least partly embedded,
wherein the first (14) and second (16) impact resistant thermoplastic layers provide a shock absorbing function to protect the IC chip.

2. A cover according to claim 1, wherein the cover layer is a woven, paper or cardboard layer.

3. A cover according to claim 2, wherein the cover layer is made from woven polyester/cotton, woven nylon, or Teslin.

4. A cover according to any of the preceding claims, wherein the first impact resistant, thermoplastic layer comprises one of PET TPE, PC TPE, PP TFE or PE TPE.

5. A cover according to any of the preceding claims, wherein the second impact resistant thermoplastic layer comprises one of PET TPE, PC TPE, PP TFE or PE TPE.

6. A cover according to any of the preceding claims, wherein the second impact resistant thermoplastic layer is secured, for example, laminated, to a further layer such that the IC chip is fully embedded in the second impact resistant thermoplastic layer and the further layer.

7. A cover according to claim 6, wherein the further layer comprises a woven material such as polyester, polyester cotton, paper or cardboard.

8. A cover according to any of the preceding claims, further comprising an antenna connected to the IC chip and embedded in the first impact resistant thermoplastic layer.

9. A cover according to any of the preceding claims, wherein the outer layer comprises one or more layers of a coating, for example a decorative resin.

10. A cover according to any of the preceding claims, wherein the outer layer is embossed to present the decorative finish.

11. A cover according to claim 10, wherein the finish defines a grain pattern.

12. A cover according to any of the preceding claims, wherein the first and second impact resistant thermoplastic layers, together with the further layer if provided, have an elongate section cut away adjacent a spine of the cover.

13. A booklet having a number of pages and a cover according to any of the preceding claim.

14. A booklet according to claim 13, wherein the cover is secured to an end page of the booklet.

15. A booklet according to claim 13 or claim 14, the booklet comprising a passport, one or more pages carrying security indicia relating to the bearer of the passport.

16. A method of manufacturing a flexible, impact resistant cover for a booklet, the method comprising
a) providing a cover layer (10) with an outer layer (12) and forming the outer surface of the outer layer to present a decorative finish;
b) securing a first impact resistant thermoplastic layer (14) to the opposite side of the cover layer (10) from the outer layer to form a cover assembly (1);
c) securing a second impact resistant thermoplastic layer (16) to the first impact resistant thermoplastic layer (14); and,
d) at least partially embedding an IC chip in the second impact resistant thermoplastic layer (16),
wherein the first and second impact resistant thermoplastic layers providing a shock absorbing function to protect the IC chip.

17. A method according to claim 16, wherein step a) comprises coating the outer layer on the cover layer.

18. A method according to claim 16 or claim 17, wherein the outer layer comprises one or more layers of a decorative resin.

19. A method according to any of claims 16 to 18, wherein the outer layer is embossed with the decorative finish.

20. A method according to any of claims 16 to 19, wherein the cover layer comprises a woven material such as woven polyester or polyester/cotton, paper or cardboard.

21. A method according to any of claims 16 to 20, wherein step b) comprises laminating the first impact resistant thermoplastic layer to the cover layer.

22. A method according to any of claims 16 to 21, wherein step c) comprises laminating the second impact resistant thermoplastic layer to the first impact resistant thermoplastic layer.

23. A method according to any of claims 16 to 21, wherein the first impact resistant layer comprises one of PET TPE, PC TPE, PP TFE or PE TPE.

24. A method according to any of claims 16 to 23, wherein the second impact resistant layer comprises one of PET TPE, PC TPE, PP TFE or PE TPE.

25. A method according to any of claims 16 to 24, wherein steps b) and c) are carried out simultaneously.

26. A method according to any of claims 16 to 24, wherein steps a) and b) are performed in one location and steps c) and d) are performed in another location.

27. A method according to any of claims 16 to 26, wherein the IC chip is connected to an antenna which is at least partially embedded in the second impact resistant thermoplastic layer.

28. A method according to any of claims 16 to 27, wherein prior to step c) the second impact resistant layer is provided on a further layer.

29. A method according to claim 28, wherein the further layer is a woven material such as polyester or polyester and cotton.

30. A method according to any of claims 16 to 29, wherein step d) comprises forming, for example die cutting, a cavity in the second impact resistant layer, and the further layer if provided, and placing the IC chip in the cavity.

31. A method according to any of claims 16 to 30, further comprising removing an elongate section of the first and second impact resistant layers, and the further layer if provided, in a region adjacent a spine of the cover.

32. A method according to any of claims 16 to 31, further comprising forming a booklet by securing the cover to an end page of a number of pages.

33. A method according to claim 32, wherein the booklet is a passport, the method further comprising providing security indicia relating to a bearer of the passport on one or more of the pages.

## Patentansprüche

1. Flexibler, formstabiler Umschlag für ein Buch, wobei der Umschlag umfasst:
eine Umschlagbaugruppe (1), umfassend eine Umschlagschicht (10), die an einer ersten formstabilen thermoplastischen Schicht (14) gesichert ist, und eine Außenschicht (12) auf der Umschlagschicht (10), deren Außenfläche so gebildet ist, dass sie eine dekorative Oberfläche darstellt; und
eine zweite formstabile thermoplastische Schicht (16), die an der ersten formstabilen thermoplastischen Schicht (15) gesichert ist, und in der ein IC-Chip mindestens teilweise eingebettet ist,
wobei die erste (14) und zweite (16) formstabile thermoplastische Schicht eine stoßdämpfende Funktion bereitstellen, um den IC-Chip zu schützen.

2. Umschlag nach Anspruch 1, wobei die Umschlagschicht eine Web-, Papier- oder Pappschicht ist.

3. Umschlag nach Anspruch 2, wobei die Umschlagschicht aus gewebtem Polyester/Baumwolle, gewebtem Nylon oder Teslin besteht.

4. Umschlag nach einem der vorhergehenden Ansprüche, wobei die erste formstabile thermoplastische Schicht eines von PET TPE, PC TPE, PP TFE oder PE TPE umfasst.

5. Umschlag nach einem der vorhergehenden Ansprüche, wobei die zweite formstabile thermoplastische Schicht eines von PET TPE, PC TPE, PP TFE oder PE TPE umfasst.

6. Umschlag nach einem der vorhergehenden Ansprüche, wobei die zweite formstabile thermoplastische Schicht beispielsweise laminiert an einer weiteren Schicht gesichert ist, so dass der IC-Chip vollständig in der zweiten formstabilen thermoplastischen Schicht und der weiteren Schicht eingebettet ist.

7. Umschlag nach Anspruch 6, wobei die weitere Schicht ein gewebtes Material wie Polyester, Polyesterbaumwolle, Papier oder Pappe umfasst.

8. Umschlag nach einem der vorhergehenden Ansprüche, überdies umfassend eine Antenne, die an den IC-Chip angeschlossen ist und in der ersten formstabilen thermoplastischen Schicht eingebettet ist.

9. Umschlag nach einem der vorhergehenden Ansprüche, wobei die Außenschicht eine oder mehrere Schichten einer Beschichtung umfasst, beispielsweise ein dekoratives Harz.

10. Umschlag nach einem der vorhergehenden Ansprüche, wobei die Außenschicht geprägt ist, um die dekorative Oberfläche darzustellen.

11. Umschlag nach Anspruch 10, wobei die Oberfläche ein gekörntes Muster definiert.

12. Umschlag nach einem der vorhergehenden Ansprüche, wobei die erste und zweite formstabile thermoplastische Schicht, zusammen mit der weiteren Schicht, wenn vorhanden, einen verlängerten Abschnitt aufweisen, der neben einem Rücken des Umschlags weggeschnitten ist.

13. Buch, das eine Anzahl Seiten und einen Umschlag gemäß einem der vorhergehenden Ansprüche aufweist.

14. Buch nach Anspruch 13, wobei der Umschlag an einer Endseite des Buchs gesichert ist.

15. Buch nach Anspruch 13 oder Anspruch 14, wobei das Buch einen Pass, eine oder mehrere Seiten, die Sicherheitsangaben in Bezug auf den Träger des Passes tragen, umfasst.

16. Verfahren zum Herstellen eines flexiblen, formstabilen Umschlags für ein Buch, wobei das Verfahren umfasst
a) Bereitstellen einer Umschlagschicht (10) mit einer Außenschicht (12) und Bilden der Außenfläche der Außenschicht, um eine dekorative Oberfläche darzustellen;
b) Sichern einer ersten formstabilen thermoplastischen Schicht (14) an der gegenüberliegenden Seite der Umschlagschicht (10) von der Außenschicht, um eine Umschlagbaugruppe (1) zu bilden;
c) Sichern einer zweiten formstabilen thermoplastischen Schicht (16) an der ersten formstabilen thermoplastischen Schicht (14); und
d) mindestens teilweise Einbetten eines IC-Chips in der zweiten formstabilen Schicht (16),
wobei die erste und zweite formstabile thermoplastische Schicht eine stoßdämpfende Funktion bereitstellen, um den IC-Chip zu schützen.

17. Verfahren nach Anspruch 16, wobei Schritt a) das Beschichten der Außenschicht auf der Umschlagschicht umfasst.

18. Verfahren nach Anspruch 16 oder Anspruch 17, wobei die Außenschicht eine oder mehrere Schichten eines dekorativen Harzes umfasst.

19. Verfahren nach einem der Ansprüche 16 bis 18, wobei die Außenschicht mit der dekorativen Oberfläche geprägt ist.

20. Verfahren nach einem der Ansprüche 16 bis 19, wobei die Umschlagschicht ein gewebtes Material wie gewebtes Polyester oder Polyester/Baumwolle, Papier oder Pappe umfasst.

21. Verfahren nach einem der Ansprüche 16 bis 20, wobei Schritt b) das Laminieren der ersten formstabilen thermoplastischen Schicht auf der Umschlagschicht umfasst.

22. Verfahren nach einem der Ansprüche 16 bis 21, wobei Schritt c) das Laminieren der zweiten formstabilen thermoplastischen Schicht an der ersten formstabilen thermoplastischen Schicht umfasst.

23. Verfahren nach einem der Ansprüche 16 bis 21, wobei die erste formstabile Schicht eines von PET TPE, PC TPE, PP TFE oder PE TPE umfasst.

24. Verfahren nach einem der Ansprüche 16 bis 23, wobei die zweite formstabile Schicht eines von PET TPE, PC TPE, PP TFE oder PE TPE umfasst.

25. Verfahren nach einem der Ansprüche 16 bis 24, wobei die Schritte b) und c) gleichzeitig ausgeführt werden.

26. Verfahren nach einem der Ansprüche 16 bis 24, wobei die Schritte a) und b) an einem Ort ausgeführt werden und die Schritte c) und d) an einem anderen Ort ausgeführt werden.

27. Verfahren nach einem der Ansprüche 16 bis 26, wobei der IC-Chip an eine Antenne angeschlossen ist, die mindestens teilweise in der zweiten formstabilen thermoplastischen Schicht eingebettet ist.

28. Verfahren nach einem der Ansprüche 16 bis 27, wobei vor dem Schritt c) die zweite formstabile Schicht auf einer weiteren Schicht bereitgestellt wird.

29. Verfahren nach Anspruch 28, wobei die weitere Schicht ein gewebtes Material wie Polyester oder Polyester und Baumwolle ist.

30. Verfahren nach einem der Ansprüche 16 bis 29, wobei Schritt d) das Bilden beispielsweise Stanzen eines Hohlraums in der zweiten formstabilen Schicht und der weiteren Schicht, wenn vorhanden, und das Platzieren des IC-Chips in den Hohlraum umfasst.

31. Verfahren nach einem der Ansprüche 16 bis 30, überdies umfassend das Entfernen eines verlängerten Abschnitts der ersten und zweiten formstabilen Schicht und der weiteren Schicht, wenn vorhanden, in einem Bereich neben einem Rücken des Umschlags.

32. Verfahren nach einem der Ansprüche 16 bis 31, überdies umfassend das Bilden eines Buchs durch Sichern des Umschlags an einer Endseite einer Anzahl von Seiten.

33. Verfahren nach Anspruch 32, wobei das Buch ein Pass ist, wobei das Verfahren überdies Sicherheitsangaben in Bezug auf einen Träger des Passes auf einer oder mehreren Seiten umfasst.

## Revendications

1. Couverture flexible, résistant aux chocs, pour un livret, la couverture comprenant:
un ensemble de couverture (1) comprenant une couche de couverture (10) attachée à une première couche thermoplastique (14) résistant aux chocs, et une couche externe (12) sur la couche de couverture (10), dont la surface externe a été façonnée de façon à présenter une finition décorative, et
une seconde couche thermoplastique (16) résistant aux chocs, attachée à la première couche thermoplastique (14) résistant aux chocs et dans laquelle est au moins partiellement noyée un puce de circuit intégré,
la première (14) et la seconde (16) couches thermoplastiques résistant aux chocs assurant une fonction d'absorption des chocs pour protéger le puce de circuit intégré.

2. Couverture selon la revendication 1, dans laquelle la couche de couverture est une couche tissée, de papier ou de carton.

3. Couverture selon la revendication 2, dans laquelle la couche de couverture est faite de polyester/coton tissé, de nylon tissé ou de Teslin.

4. Couverture selon l'une quelconque des revendications précédentes, dans laquelle la première couche thermoplastique résistant aux chocs comprend un élastomère thermoplastique (TPE) parmi PET, PC, PP et PE.

5. Couverture selon l'une quelconque des revendications précédentes, dans laquelle la seconde couche thermoplastique résistant aux chocs comprend un élastomère thermoplastique (TPE) parmi PET, PC, PP et PE.

6. Couverture selon l'une quelconque des revendications précédentes, dans laquelle la seconde couche thermoplastique résistant aux chocs est attachée, par exemple stratifiée sur une couche additionnelle telle que le puce de circuit intégré est complètement noyé dans la seconde couche thermoplastique résistant aux chocs et la couche additionnelle.

7. Couverture selon la revendication 6, dans laquelle la couche additionnelle comprend une matière tissée telle que polyester, polyester et coton, papier ou carton.

8. Couverture selon l'une quelconque des revendications précédentes, comprenant de plus une antenne connectée à la puce de circuit intégré et noyée dans la première couche thermoplastique résistant aux chocs.

9. Couverture selon l'une quelconque des revendications précédentes, dans laquelle la couche externe consiste en une ou plusieurs couches d'un revêtement, par exemple une résine décorative.

10. Couverture selon l'une quelconque des revendications précédentes, dans laquelle la couche externe est gaufrée pour présenter une finition décorative.

11. Couverture selon la revendication 10, dans laquelle la finition définit un motif grainé.

12. Couverture selon l'une quelconque des revendications précédentes, dans laquelle la première et la seconde couches thermoplastiques résistant aux chocs présentent, avec la couche additionnelle si elle est prévue, une section allongée découpée près d'un dos de la couverture.

13. Livret possédant un certain nombre de pages et une couverture selon l'une quelconque des revendications précédentes.

14. Livret selon la revendication 13, dans lequel la couverture est attachée à une page terminale du livret.

15. Livret selon la revendication 13 ou la revendication 14, le livet comprenant un passeport, une ou plusieurs pages portant des signes de protection concernant le porteur du passeport.

16. Procédé de fabrication d'une couverture flexible, résistant aux chocs, pour un livret, le procédé consistant à
a) pourvoir une couche de couverture (10) d'une couche externe (12) et façonner la surface externe de la couche externe pour qu'elle présente une finition décorative,
b) attacher une première couche (14) thermoplastique, résistant aux chocs, sur la face opposée de la couche de couverture (10) par rapport à la couche externe pour former un ensemble de couverture (1),
c) attacher une seconde couche thermoplastique (16) résistant aux chocs à la première couche thermoplastique (14) résistant aux chocs, et
d) noyer au moins partiellement un puce de circuit intégré dans la seconde couche thermoplastique (16) résistant aux chocs.
dans lequel la première et la seconde couches thermoplastiques résistant aux chocs assurent une fonction d'absorption des chocs pour protéger le puce de circuit intégré.

17. Procédé selon la revendication 16, dans lequel l'étape a) comprend l'application de la couche externe sur la couche de couverture.

18. Procédé selon la revendication 16 ou la revendication 17, dans lequel la couche externe comprend une ou plusieurs couches d'une résine décorative.

19. Procédé selon l'une quelconque des revendications 16 à 18, dans lequel la couche de couverture est pourvue de la finition décorative par gaufrage.

20. Procédé selon l'une quelconque des revendications 16 à 19, dans lequel la couche de couverture comprend une matière tissée telle que du polyester ou du polyester/coton tissé, du papier ou du carton.

21. Procédé selon l'une quelconque des revendications 16 à 20, dans lequel l'étape b) comprend la stratification de la première couche thermoplastique résistant aux chocs sur la couche de couverture.

22. Procédé selon l'une quelconque des revendications 16 à 21, dans lequel l'étape c) comprend la stratification de la seconde couche thermoplastique résistant aux chocs sur la première couche thermoplastique résistant aux chocs.

23. Procédé selon l'une quelconque des revendications 16 à 21, dans lequel la première couche résistant aux chocs comprend un élastomère thermoplastique (TPE) parmi PET, PC, PP et PE.

24. Procédé selon l'une quelconque des revendications 16 à 23, dans lequel la seconde couche résistant aux chocs comprend un élastomère thermoplastique (TPE) parmi PET, PC, PP et PE.

25. Procédé selon l'une quelconque des revendications 16 à 24, dans lequel les étapes b) et c) sont mises en oeuvre simultanément.

26. Procédé selon l'une quelconque des revendications 16 à 24, dans lequel les étapes a) et b) sont effectuées à un endroit, et les étapes c) et d) sont effectuées à un autre endroit.

27. Procédé selon l'une quelconque des revendications 16 à 26, dans lequel le puce de circuit intégré est connectée à une antenne qui est au moins partiellement noyée dans la seconde couche thermoplastique résistant aux chocs.

28. Procédé selon l'une quelconque des revendications 16 à 27, dans lequel la seconde couche résistant aux chocs est pourvue d'une couche additionnelle avant l'étape c).

29. Procédé selon la revendication 28, dans lequel la couche additionnelle est une matière tissée telle que du polyester ou du polyester et du coton.

30. Procédé selon l'une quelconque des revendications 16 à 29, dans lequel l'étape d) comprend la formation, par exemple par découpe, d'une cavité dans la seconde couche résistant aux chocs, et la couche additionnelle si elle est prévue, et le placement du puce de circuit intégré dans la cavité.

31. Procédé selon l'une quelconque des revendications 16 à 30, comprenant en outre l'enlèvement d'une section allongée de la première et de la seconde couches résistant aux chocs, et la couche additionnelle si elle est prévue, dans une région adjacente à un dos de la couverture.

32. Procédé selon l'une quelconque des revendications 16 à 31, comprenant en outre la formation d'un livret en attachant la couverture à une page terminale d'un certain nombre de pages.

33. Procédé selon la revendication 32, dans lequel le livret est un passeport, le procédé comprenant en outre la fourniture de signes de protection concernant le porteur du passeport sur une ou plusieurs pages.
